# EUROPEAN PATENT SPECIFICATION

(11) **EP 4 239 958 B1**
(45) Date of publication and mention of the grant of the patent: **25.03.2026**
(21) Application number: 21885098.0
(22) Date of filing: 25.10.2021
(51) Int. Cl.: H04L 12/12, H04L 67/025, H04L 67/141, G06F 11/36, G08C 17/02

(54) **REMOTE CONTROL-BASED INTERACTION METHOD**
AUF FERNSTEUERUNG BASIERENDES INTERAKTIONSVERFAHREN
PROCÉDÉ D'INTERACTION BASÉ SUR UNE COMMANDE À DISTANCE

(30) Priority: 29.10.2020 CN 202011178262
(43) Date of publication of application: 06.09.2023
(73) Proprietor: Sistalk Technology (Beijing) Co., Ltd, Beijing 100022 (CN)
(72) Inventor: LIU, Bo, Beijing 100022 (CN)
(74) Representative: Cabinet Chaillot
(86) International application number: PCT/CN2021/126152
(87) International publication number: WO 2022/089371

(56) References cited:
- EP-A1- 1 696 620
- WO-A1-2015/035783
- WO-A1-2015/135386
- CN-A- 103 268 288
- CN-A- 110 415 500
- CN-A- 110 519 396
- CN-A- 110 932 958
- US-A1- 2015 033 078

## Description

This application claims priority to Chinese patent application 'A remote control based interactive method' with application No. 202011178262.9 and filed with the Chinese Patent Office on October 29, 2020.

### 1. Technical Field

The invention relates to an interactive method, in particular to a remote control based interaction method.

### 2. Background Art

With the popularity of smart mobile terminals and the Internet, smart mobile terminals have become a part of people's daily life instead of a mere communication tool. In particular, with the increasing number of applications on smart mobile terminals, people can easily and flexibly access the interested contents on smart mobile terminals. With the development of society, people gradually have increasingly high requirements for other interactive methods through intelligent mobile terminals, and it is now increasingly difficult to achieve the corresponding needs by simply interacting with images between intelligent mobile terminals.

Patent documents EP1696620A1, WO2015/135386A1 and WO2015/035783A1 illustrate the technological background of a remote control based interaction method as defined in claim 1.

### 3. Summary of the Invention

The invention relates to a remote control based interaction method as defined in claim 1.

According to a solution of the invention, the invention realizes the control of the electronic device connected to at least one of the clients through two remotely connected clients, enabling real-time interaction online even if the two clients have a large distance separated, guaranteeing the instantaneity of the interaction.

According to a solution of the invention, the first client and the second client interact through the room established on the remote server, to ensure the security and privacy of the interaction process, and effectively protect the privacy of the client.

According to a solution of the invention, controlling the electronic device by using either client can realize the two-way nature of the interaction between the clients, resulting in a rich and interesting interaction process.

According to a solution of the invention, the temporal sequence of control instructions can be arranged on the first client and the second client by adopting a timeline, enabling the playback and adjustment of the interaction process by the user, resulting in the optimal effect of the whole interaction process.

### 4. Brief Description of Accompany Drawings

FIG. 1 is a schematic diagram showing a step-by-step block diagram of an interactive method according to an embodiment provided by the invention.
FIG. 2 is a schematic diagram showing a flowchart of an interactive method according to an embodiment provided by the invention.

### 5. Specific Embodiment of the invention

To make the technical solutions provided by the unity model more comprehensible, the accompanying drawings required for use in the description of embodiments or prior art are briefly described below. Apparently, the described drawings are merely some embodiments of the application rather than all the embodiments of the application. It should be understood that the application is not limited to the drawings described herein. Based on the drawings in the disclosure, all other drawings obtained by those of ordinary skill in the art without making creative labor fall within the scope of protection of the disclosure.

In the specification of the disclosure, it is to be understood that terms such as 'lengthwise', 'transverse', 'up', 'down', 'front', 'back', 'left', 'right', 'vertical', 'horizontal', 'top', 'bottom', 'inside', 'outside' refer to the orientations and location relations which are the orientations and location relations illustrated in the drawings, and for describing the disclosure and for describing in simple, and which are not intended to indicate or imply that the device or the elements are disposed to locate at the specific directions or are structured and performed in the specific directions, which could not to be understood to the limitation of the disclosure.

The invention is described in detail hereinafter in connection with the accompanying drawings and specific embodiments, the embodiments of which cannot be described herein in detail, but the embodiments of the invention are not thereby limited to the following embodiments.

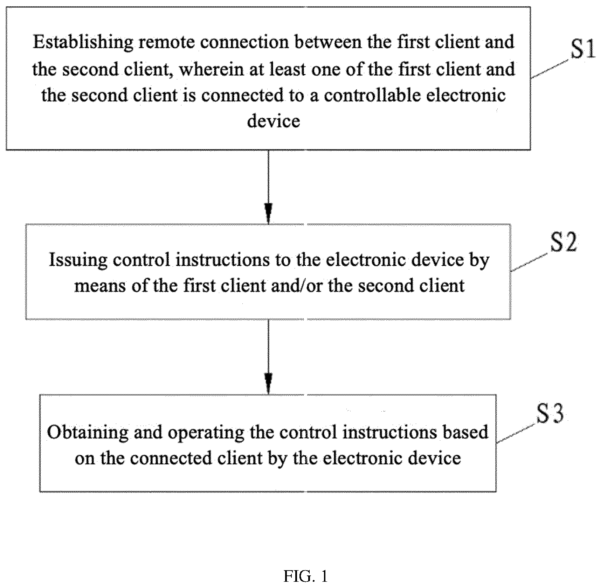

As shown in Fig.1, according to an embodiment of the invention, a remote control based interaction method provided by the invention, wherein comprises:
S1. The first client establishes remote connection with a second client, wherein at least one of the first client and the second client is connected to a controllable electronic device.
S2. The invention issues control instructions to the electronic device by means of the first client and/or the second client.
S3. The electronic device obtains and operates the control instructions based on the connected client.

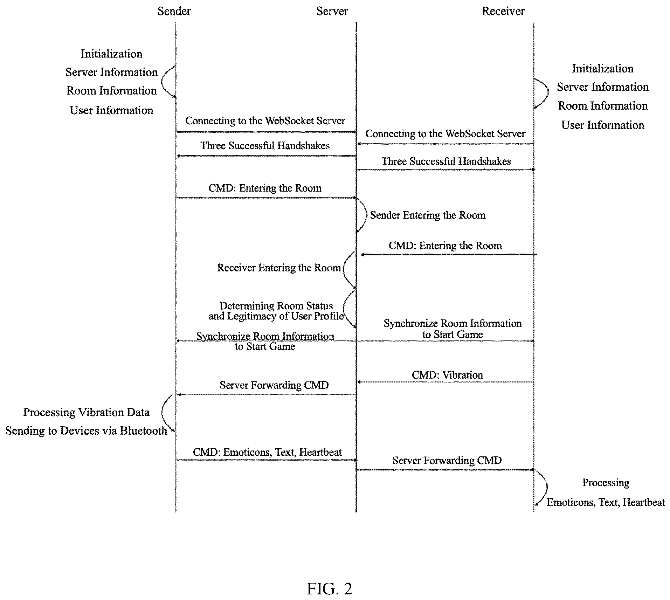

As shown in Fig. 2, according to an embodiment of the invention, in step S1, the first client and the second client adopt multimedia mobile devices including cell phones and smart watches with networking capabilities. In this embodiment, the first client and the second client are connected to the remote server, respectively. In this embodiment, the electronic device can be connected at one client, and also can be connected separately at both clients. In this embodiment, the remote server is a WebSocket server. In this embodiment, the electronic device is connected to the client via Bluetooth or WIFI.

As shown in Fig. 2, according to an embodiment of the invention, in S1, the process of establishing a remote connection between the first client and the second client comprises:
S11. The first client and the second client send a request to establish a remote connection to the remote server, respectively
S12. The remote server responds to the remote connection request and sends a verification request for establishing a remote connection to the first client and the second client, respectively. In this embodiment, the remote server sends handshake protocols to the first client and the second client, respectively.
S13. The first client and the second client respond to the verification request for establishing a remote connection, respectively. In this embodiment, both the first client and the second client receive the handshake protocol and perform handshake verification.
S14. The remote server establishes a room for remote connection of the first client and the second client. In this embodiment, after three successful handshakes between the first client and the second client, the first client and the second client enter the established room through the remote server. In this embodiment, the room can be established at the remote server by the request from the first client, and after the first client enters the room, the second client receives the room invitation to enter the room.
S15. The invention determines the legitimacy of the room status and user profiles of the first client and the second client, synchronizing the room information and completing the remote connection if legitimate.

According to an embodiment of the invention, in S1, in the process of establishing a remote connection between the first client and the second client, the first client and the second client simultaneously establish an instant messaging window for instant message interaction. In this embodiment, in the room created by the remote server, the first client and the second client carry out messages such as emoticons and texts through the instant messaging window.

As shown in Fig. 2, according to an embodiment of the invention, in S2, in the process of issuing control instructions to the electronic device via the first client and/or the second client, the electronic device is connected to the first client; if the control instructions are issued through the second client, the remote server receives the control instructions and transmits to the first client, and the first client transmits to the electronic device. For instance, if the second client sends a control instruction for vibration, it will be forwarded to the first client via the room on the remote server, and the first client receives the control instructions for vibration and transmits to the electronic device via Bluetooth or Wi-Fi. The electronic device receives the control instructions to perform vibration. The electronic device can also send an instant message to the second client via the instant messaging window while receiving the control instructions via the first client.

In this embodiment, the electronic device is connected to the first client, and if the control instructions are transmitted via the first client, the first client sends them directly to the electronic device via Bluetooth or Wi-Fi. At the same time, the first client simultaneously sends the control instructions to the remote server, and the remote server transmits to the second client for sharing.

According to a claimed embodiment of the invention, in S2, in the process of issuing control instructions to the electronic device via the first client and/or the second client, a timeline is established simultaneously in the display interface of the first client and the second client, to record and display the control instructions according to the timeline.

According to a claimed embodiment of the invention, the temporal sequence of the control instructions can be adjusted according to the timeline through the first client or the second client, to update the displays simultaneously at the first client and the second client.

According to an embodiment of the invention, the interaction method provided by the invention further comprises:
S4. The electronic device starting to operate and providing operational data and data collected through sensors on the electronic device as feedback to the connected client for sharing via remote connection.

According to an embodiment of the invention, in S4, after starting the operation of the electronic device, the client connected to the electronic device optionally activates the available sound capture device and/or video capture device to collect the surrounding environment information for sharing via remote connection. The above settings allow for a more realistic and interesting environment for the entire interactive process.

The above description is only an embodiment of specific solutions provided by the invention. For the equipment and structures not described in detail therein, it should be understood that common equipment and common methods available in the field are adopted to perform them.

The invention and the embodiments thereof are described hereinabove, and this description is not restrictive. What is shown in the drawings is only one of the preferred embodiments of the invention, and the actual structure is not limited thereto.

In summary, any modification, equivalent replacement, improvement without departing from the inventive purpose of the invention in the art without creative efforts shall all fall within the protection scope of the invention.

## Claims

1. A remote control based interaction method, comprising:
S1. establishing remote connection between the first client and the second client, wherein at least one of the first client and the second client is connected to a controllable electronic device;
S2. issuing control instruction to the electronic device by means of the first client and/or the second client;
S3. obtaining and operating the control instructions based on the connected client by the electronic device,
**characterized in that**
in S2, in the process of issuing control instructions to the electronic device via the first client and/or the second client, a timeline is established simultaneously in the display interface of the first client and the second client, to record and display the control instructions according to the timeline, and the temporal sequence of the control instructions can be adjusted according to the timeline through the first client or the second client, to update the displays simultaneously at the first client and the second client.

2. A remote control based interaction method according to claim 1, wherein further comprises:
S4. starting to operate and providing operational data and data collected through sensors on the electronic device as feedback to the connected client for sharing via remote connection.

3. A remote control based interaction method according to claim 1 or 2, wherein in S1, in the process of establishing a remote connection between the first client and the second client, the first client and the second client simultaneously establish an instant messaging window for instant message interaction.

4. A remote control based interaction method according to claim 2, wherein in S4, after starting the operation of the electronic device, the client connected to the electronic device optionally activates the available sound capture device and/or video capture device to collect the surrounding environment information for sharing via remote connection.

5. A remote control based interaction method according to claim 3, wherein in S1, in the process of establishing a remote connection between the first client and the second client, comprising:
S11. the first client and the second client sending a request to establish a remote connection to the remote server, respectively;
S12. the remote server responding to the remote connection request and sending a verification request for establishing a remote connection to the first client and the second client, respectively;
S13. the first client and the second client responding to the verification request for establishing a remote connection, respectively;
S14. the remote server establishing a room for remote connection of the first client and the second client;
S15. the invention determining the legitimacy of the room status and user profiles of the first client and the second client, and synchronizing the room information and completing the remote connection if legitimate.

6. A remote control based interaction method according to claim 5, wherein in S2, in the process of issuing control instructions to the electronic device via the first client and/or the second client, the electronic device is connected to the first client; if the control instructions are issued through the second client, the remote server receives the control instructions and transmits to the first client, and the first client transmits to the electronic device; If the control instructions are issued through the first client, the first client simultaneously transmits the control instructions to the remote server, and the remote server transmits to the second client for sharing.

7. A remote control based interaction method according to claim 1 or 6, wherein the electronic device is connected to the client via Bluetooth or WIFI.

8. A remote control based interaction method according to claim 1 or 6, wherein the remote server is a WebSocket server.

## Patentansprüche

1. - Fernsteuerungsbasiertes Interaktionsverfahren, umfassend:
S1. Herstellen einer Fernverbindung zwischen dem ersten Client und dem zweiten Client, wobei mindestens einer von dem ersten Client und dem zweiten Client mit einer steuerbaren elektronischen Vorrichtung verbunden ist;
S2. Ausgeben von Steueranweisungen an die elektronische Vorrichtung mittels des ersten Clients und/oder des zweiten Clients;
S3. Erlangen und Betreiben der Steueranweisungen basierend auf dem verbundenen Client durch die elektronische Vorrichtung, **dadurch gekennzeichnet, dass**
in S2 bei dem Prozess eines Ausgebens von Steueranweisungen an die elektronische Vorrichtung über den ersten Client und/oder den zweiten Client gleichzeitig eine Zeitleiste in der Anzeigeschnittstelle des ersten Clients und des zweiten Clients erstellt wird, um die Steueranweisungen gemäß der Zeitleiste aufzuzeichnen und anzuzeigen, und die zeitliche Abfolge der Steueranweisungen gemäß der Zeitleiste durch den ersten Client oder den zweiten Client angepasst werden kann, um die Anzeigen gleichzeitig bei dem ersten Client und bei dem zweiten Client zu aktualisieren.

2. - Fernsteuerungsbasiertes Interaktionsverfahren nach Anspruch 1, wobei es ferner Folgendes umfasst:
S4. beginnen eines Betriebs und Bereitstellens von Betriebsdaten und von Daten, die durch Sensoren auf der elektronischen Vorrichtung gesammelt werden, als Rückmeldung an den verbundenen Client zur gemeinsamen Nutzung über eine Fernverbindung.

3. - Fernsteuerungsbasiertes Interaktionsverfahren nach Anspruch 1 oder 2, wobei in S1 bei dem Prozess eines Erstellens einer Fernverbindung zwischen dem ersten Client nd dem zweiten Client der erste Client und der zweite Client gleichzeitig ein Instant-Messaging-Fenster für eine Instant-Messaging-Interaktion erstellen.

4. - Fernsteuerungsbasiertes Interaktionsverfahren nach Anspruch 2, wobei in S4, nach Starten des Betriebs der elektronischen Vorrichtung, der mit der elektronischen Vorrichtung verbundene Client optional die verfügbare Tonaufnahmevorrichtung und/oder Videoaufnahmevorrichtung aktiviert, um die Umgebungsinformationen zur gemeinsamen Nutzung über eine Fernverbindung zu sammeln.

5. - Fernsteuerungsbasiertes Interaktionsverfahren nach Anspruch 3, wobei in S1 bei dem Prozess eines Erstellens einer Fernverbindung zwischen dem ersten Client und dem zweiten Client Folgendes umfasst:
S11. der erste Client und der zweite Client senden jeweils eine Anfrage zum Erstellen einer Fernverbindung mit dem entfernten Server;
S12. der entfernte Server antwortet auf die Fernverbindungsanforderung und sendet eine Verifizierungsanforderung zum Erstellen einer Fernverbindung jeweils an den ersten Client und den zweiten Client;
S13. der erste Client und der zweite Client antworten jeweils auf die Verifizierungsanforderung zum Erstellen einer Fernverbindung;
S14. der entfernte Server erstellt einen Raum für eine Fernverbindung des ersten Clients und des zweiten Clients;
S15. die Erfindung bestimmt die Rechtmäßigkeit des Raumstatus und der Benutzerprofile des ersten Clients und des zweiten Clients und synchronisiert die Rauminformationen und schließt die Fernverbindung ab, wenn sie rechtmäßig ist.

6. - Fernsteuerungsbasiertes Interaktionsverfahren nach Anspruch 5, wobei in S2 während des Prozesses eines Ausgebens von Steueranweisungen an die elektronische Vorrichtung über den ersten Client und/oder den zweiten Client die elektronische Vorrichtung mit dem ersten Client verbunden ist; wenn die Steueranweisungen über den zweiten Client ausgegeben werden, der entfernte Server die Steueranweisungen empfängt und sie an den ersten Client überträgt, und der erste Client sie an die elektronische Vorrichtung überträgt; wenn die Steueranweisungen durch den ersten Client ausgegeben werden, der erste Client gleichzeitig die Steueranweisungen an den entfernten Server überträgt, und der entfernte Server sie an den zweiten Client zur gemeinsamen Nutzung überträgt.

7. - Fernsteuerungsbasiertes Interaktionsverfahren nach Anspruch 1 oder 6, wobei die elektronische Vorrichtung über Bluetooth oder WIFI mit dem Client verbunden ist.

8. - Fernsteuerungsbasiertes Interaktionsverfahren nach Anspruch 1 oder 6, wobei der entfernte Server ein WebSocket-Server ist.

## Revendications

1. - Procédé d'interaction basé sur une commande à distance, comprenant :
S1. établir une connexion à distance entre le premier client et le second client, au moins l'un du premier client et du second client étant connecté à un dispositif électronique commandable ;
S2. émettre des instructions de commande au dispositif électronique au moyen du premier client et/ou du second client ;
S3. obtenir et exécuter les instructions de commande sur la base du client connecté par le dispositif électronique,
**caractérisé par le fait que** :
en S2, dans le processus d'émission d'instructions de commande au dispositif électronique via le premier client et/ou le second client, une chronologie est établie simultanément dans l'interface d'affichage du premier client et du second client, pour enregistrer et afficher les instructions de commande en fonction de la chronologie, et la séquence temporelle des instructions de commande peut être ajustée en fonction de la chronologie via le premier client ou le second client, pour mettre à jour les affichages simultanément sur le premier client et sur le second client.

2. - Procédé d'interaction basé sur une commande à distance selon la revendication 1, comprenant en outre :
S4. commencer à fonctionner et fournir des données opérationnelles et des données collectées par des capteurs sur le dispositif électronique en tant que retour d'informations au client connecté pour un partage via une connexion à distance.

3. - Procédé d'interaction basé sur une commande à distance selon la revendication 1 ou 2, dans lequel en S1, dans le processus d'établissement d'une connexion à distance entre le premier client et le second client, le premier client et le second client établissent simultanément une fenêtre de messagerie instantanée pour une interaction par messages instantanés.

4. - Procédé d'interaction basé sur une commande à distance selon la revendication 2, dans lequel en S4, après avoir démarré le fonctionnement du dispositif électronique, le client connecté au dispositif électronique active facultativement le dispositif de capture de son et/ou le dispositif de capture vidéo disponible pour collecter les informations d'environnement ambiant pour un partage via la connexion à distance.

5. - Procédé d'interaction basé sur une commande à distance selon la revendication 3, dans lequel en S1, dans le processus d'établissement d'une connexion à distance entre le premier client et le second client, comprenant :
S11. le premier client et le second client envoient respectivement une demande d'établissement d'une connexion à distance au serveur distant ;
S12. le serveur distant répond à la demande de connexion à distance et envoie une demande de vérification pour l'établissement d'une connexion à distance respectivement au premier client et au second client ;
S13. le premier client et le second client répondent respectivement à la demande de vérification pour l'établissement d'une connexion à distance ;
S14. le serveur distant établit une salle pour une connexion à distance du premier client et du second client ;
S15. l'invention détermine la légitimité du statut de la salle et des profils d'utilisateur du premier client et du second client, et synchronise les informations de la salle et achève la connexion à distance si cela est légitime.

6. - Procédé d'interaction basé sur une commande à distance selon la revendication 5, dans lequel en S2, lors du processus d'émission d'instructions de commande au dispositif électronique via le premier client et/ou le second client, le dispositif électronique est connecté au premier client ; si les instructions de commande sont émises par le second client, le serveur distant reçoit les instructions de commande et les transmet au premier client, et le premier client les transmet au dispositif électronique ; si les instructions de commande sont émises par le premier client, le premier client transmet simultanément les instructions de commande au serveur distant, et le serveur distant les transmet au second client pour un partage.

7. - Procédé d'interaction basé sur une commande à distance selon la revendication 1 ou 6, dans lequel le dispositif électronique est connecté au client via Bluetooth ou WIFI.

8. - Procédé d'interaction basé sur une commande à distance selon la revendication 1 ou 6, dans lequel le serveur distant est un serveur WebSocket.
